# EUROPEAN PATENT APPLICATION

(11) **EP 2 006 966 A1**
(43) Date of publication of application: **24.12.2008**
(21) Application number: 07252543.9
(22) Date of filing: 22.06.2007
(51) Int. Cl.: H02G 3/10

(54) **Electrical and service distribution system**

(71) Applicant: C & C Marshall Limited, Sidney Little Road Churchfields Industrial Estate St Leonards-on-Sea, East Sussex TN38 9PU (GB)
(72) Inventor: Austin, Brian Richard, Westfield, East Sussex TN35 4QZ (GB)
(74) Representative: Lamb, Martin John Carstairs

(57) **Abstract**

In order to allow a preassembled service distribution box to be fixed onto a wall, there is provided an electrical or service distribution system comprising a wall element (1) in the form of a plate having a first side for resting against the wall and a second side opposite the first side. There is an electrical service distribution box (2) engageable with the wall element (1), respective fixing means (16) being provided on the second side of the wall element (1) and in the box for releasably fixing the box to the wall element (1), wherein the box comprises a service distribution device connected to wires or cables (4), the wires or cables terminating in a plug connector (5), the face of the box for contacting the wall element (1) being substantially closed.

## Description

The present invention relates to an electrical and service distribution system.

In modem buildings, it is necessary to provide systems for the distribution of electrical power and services such as data transmission and communications.

This is achieved by networks of cables, for example electrical cables or fibre optic cables. These are typically contained in ducts for example trunking or closed conduits. Access to the cables is provided at boxes to which lengths of trunking or conduit are connected. Where relatively large trunking is provided, outlets can be contained within the trunking, but smaller trunking requires a junction between a length of trunking or conduit and the outlet box. Lengths of conduit or trunking can be laid for example beneath a raised floor, directly onto a wall or behind panelling such as dry lining.

The present invention is concerned with distribution systems which comprise lengths of conduit or trunking which are suitable for mounting on a wall and which form junctions with outlet boxes.

When such systems are installed, an installer typically has to locate the positions of the outlet boxes and connecting lengths of conduit or trunking, lay cable in trunking, establish electrical connection between conductors of the cables and accessories contained in the outlet and finally, apply a closure to the outlet. This system is time consuming. It also requires expert installers who are qualified to handle electrical components.

The present inventor has realised that this requirement for skill and qualifications in assembly of electrical components can be removed if the outlet box can be provided so that it is wired up beforehand, wires or cables terminating in a plug connector being provided for making connection to other plug connectors attached to cables laid in the trunking. However, the present inventor has further realised that there is a problem with such a system. Traditional outlet boxes comprised at least a bottom and a top. The bottom is installed on a wall surface and screwed in place, after which the necessary wiring connections are made and the lid put in place. The initial step of placing the bottom of the box in the right position cannot be done when the box is supplied as a closed unit. This makes accurate installation relatively difficult.

The present inventor has therefore set out to provide a distribution system which can be assembled by unskilled or unqualified workers but which is easy to install in the correct position.

The present inventor has realised that a wall element may be provided, for attachment to a wall during assembly of the system, to provide a correctly positioned seat for receiving a closed box.

Accordingly, the present invention provides a service distribution system, comprising a wall element, having a first side for mounting adjacent a wall and a second side opposite the first side, an electrical or service distribution box engageable with the wall element, respective fixing means being provided on the second side of the wall element and in the box for releasably fixing the box to the wall element, wherein the box comprises a service distribution device connected to wires or cables, the wires or cables terminating in a plug connector, the face of the box for contacting the wall element being substantially closed.

Preferred and optional features of the present invention will be described further below.

The wall element may have any suitable configuration. It is preferably generally flat or plate shaped. Preferably, the distance between the first side and the second side is relatively small, so that the assembled system does not project very far from the wall. The wall element may have any suitable configuration in the plane of the first and second sides. Preferably, it corresponds to the shape and size, in the plane of the wall, of the corresponding service distribution box. In this way, the area occupied by the service distribution system when assembled is not unnecessarily large.

The fixing means may comprise any suitable means. For example, there may be means for receiving a bolt or screw on the wall element or service distribution box. A screw threaded bore may be provided on one of the wall element or service distribution box, for engagement with a screw passing through a hole formed in the other of the wall element or service distribution box.

The fixing means may comprise means formed on the back of the box for example in or on a rear face.

It is particularly preferred that the fixing means should be configured so that it is substantially covered by the service distribution box when it is in place in the wall element. In this way, the fixing means can be placed out of sight and away from potential interference.

Detent means may be provided, having a first position allowing the wall element and service distribution box to be separated and a second position resisting separation of the wall element and service distribution box. The detent means may be biased into the second position. For example, the detent means may comprise a projection from one of the wall element and service distribution box, the projection having an undercut which, in the second position, engages a corresponding undercut formation of the other of the wall element and service distribution box, whereby the detent means holds the wall element and service distribution box together.

Where a detent means is provided, it may be moved from the second position to the first position by any suitable means. For example, access may be provided to move the detent means with a tool such as a screwdriver. The detent means may be configured so that it will be moved from the second position to the first position by applying a sufficiently large force in a given direction to separate the service distribution box and the wall element.

Preferably, there is a plurality of detent means, for example at least two and preferably at least four.

Where a plurality detent means is provided, it is preferred that the direction of movement from the second position to the first position for a first detent means is different to that for a second detent means, so that if force is applied to the service distribution box, at least one detent means will tend to resist removal of the service distribution box from the wall element.

At least one of the wall element and service distribution box may comprise a projecting rim for extending around the perimeter of the other of the wall element and service distribution box, to provide a snug fit and a smooth closure to prevent access of dirt. Preferably, the upstanding rim is formed on the wall element.

The wall element may comprise any suitable means for fixing to a wall. For example, the first face may comprise an adhesive surface. However, it is particularly preferred that at least one screw hole be provided through which a screw can be passed to fix the wall element to a wall, in a manner which is analogous to the fixing of conventional service distribution boxes to walls.

The wall element may comprise a substantially flat structure. It may be provided with strengthening ribs or strengthening undulations, to provide stiffness.

The wall element and service distribution box may be comprised of any suitable material, for example metal. They may be formed of the same material, or different. Preferably, they are formed of synthetic material, for example thermoplastic material such as injection moulded UPVC.

The service distribution system preferably comprises at least one length of ducting, for example conduit or trunking, for containing cables such as electrical cables or optical signal cables.

A formation may be provided on the wall element for receiving an end of a section of ducting to which connection is to be made. For example, the formation may comprise a cutaway portion extending inwardly from the perimeter of the wall element. A plurality of formations may be provided if the wall element is for connection to a plurality of lengths of ducting. A stop surface may be provided to define a position against which the ducting rests in the assembled position, to assist assembly.

The service distribution box may comprise any conventional service distribution device, for example a power outlet in the form of a two or three pin socket, a connection for other power sources, electrical signal cables such as telephone cables or optical communication cables.

It is particularly preferred that the present invention be used with a service distribution device comprising electrical connections, because such connections are normally installed by persons with high level of qualifications. The present invention allows installation to be carried out by unskilled assemblers, a qualified technician being required only to check the integrity of the system.

The service distribution box may have any suitable configuration. In accordance with normal practice, it will typically have a square or rectangular section.

The service distribution box may be composed of a plurality of parts. However, it is particularly preferred that such parts are assembled before installation of the service distribution system. In this way, they can be assembled and checked for electrical integrity in a factory.

In conventional boxes, wires or cable extend from ducting, into the box and a direct connection is formed to the service distribution device by a skilled technician. According to the present invention, the box comprises pre-assembled wires or cables which extend from the service distribution device to a plug connector. The plug connector can be formed as part of the box, for example in a wall thereof so that connection can be formed to a corresponding plug connector which is mounted in the ducting. However, it is particularly preferred that wires or cables extend out of the box and terminate in a plug connector located outside the box. This will allow connection to be formed by an installer with a corresponding plug connector of cables laid in the ducting in a relatively straightforward and easy fashion. The connected plug connectors will, in the assembled service distribution system, preferably be contained within the ducting.

Any suitable design of plug connector can be used.

The service distribution box according to the present invention is substantially closed. That is, access to or interference with components of the distribution device should be prevented by the structure of the box. It is acceptable that apertures may be formed in the service distribution box. For example, there may be a hole through which wires extend. There may be holes for receiving detent means of the fixing means of the wall element. However, as long as such holes do not compromise the electrical integrity of the box, they will be acceptable.

Preferably, the face of the surface distribution box which contacts the wall element in use is closed in the sense that the only electrical connection formed between the service distribution device and a conduit attached to the wall element is provided by the wires or cables terminating in a plug connector. In this way, electrical connection between the service distribution device and cables or wires laid in the conduit can be made by persons without specialist training simply by plugging in the respective connections.

Conventional service distribution boxes typically comprise holes in a rear face thereof through which screws or other fixing means can be passed to fix the service distribution box to a wall. In such systems, electrical connection between a service distribution device and cabling is made by an assembly step carried out by a skilled technician, for example, by screwing contacts to wires. In order to allow the service distribution box of the present invention to be used in such systems, screw fixing holes may be provided in a rear face of the service distribution box, though it will be understood that they are not normally used in the method of the present invention.

The box preferably comprises a front face, side walls and a rear face. These are all at least partially complete. Some of these faces may comprise holes (particularly the rear face), but are not such as to compromise the electrical integrity of the box, particularly during use.

The box may comprise a formation for receiving the end of ducting for containing cables. For example, a hole may be formed in at least one side wall of the box into which the ducting extends, in the assembled position.

According to another aspect, the present invention provides a method of installing a service distribution system comprising fixing to a wall a wall element having a first side for mounting adjacent the wall and a second side opposite the first side, connecting an electrical or service distribution box to the wall element, using respective fixing means provided on the second side of the wall element and the box, wherein the box comprises a service distribution device connected to wires or cables, the wires or cables terminating in a plug connector, the face of the box for contacting the wall element being substantially closed, the plug connector of the box being connected to a corresponding plug connector of wires or cables of the service distribution system.

The step of making plug connection between the box and other wires or cables can be made before or after the step of engaging the box with the wall element.

The present invention will be further described with reference to the accompanying drawings, in which:

### BRIEF DESCRIPTION OF THE DRAWINGS

Figure 1 is an isometric view of the service distribution system according to the present invention, substantially assembled.
Figure 2 is a sketch isometric view of the service distribution system of the present invention, partially assembled.
Figure 3 is a sketch isometric view at enlarged scale of the wall element.
Figure 4 is a sketch isometric view, for explanation only, showing the engagement between the service distribution box and the wall element.
Figure 5 is a view of the rear face of the box.

### DETAILED DESCRIPTION OF THE DRAWINGS

The service distribution system of the present invention comprises, a wall element in the form of a wall plate 1, an electrical or service distribution box (in this case, a conventional three-pin socket), ducting 3 in the form of trunking for receiving a cable 4 which extends out of the box 2 and which terminates in a plug connector 5. In use, the plug connector 5 will be connected to a corresponding plug connector of another cable (not shown) which is laid in the ducting 3, for further connection of the service distribution box.

It can be seen that the ducting 3 comprises trunking having a base part 6 and a cover 7 which is releasably engaged with the base. Part of the cover 7a is shown removed. In practice, the entire length of the ducting 3 would be covered in the assembled state.

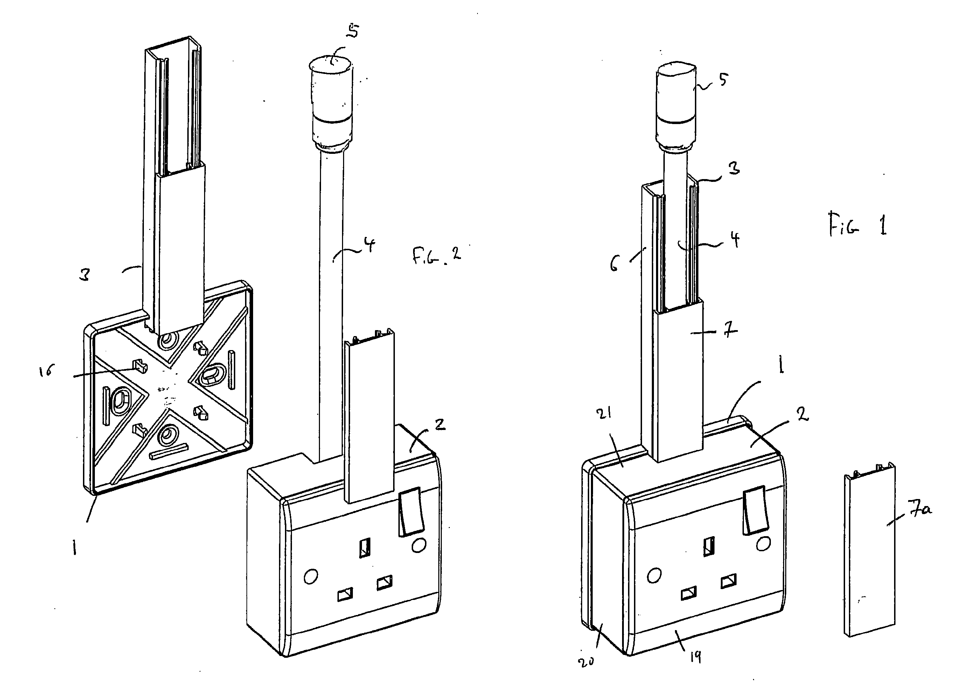

Figure 2 shows the system in a partially assembled state. The wall plate 1 has been engaged with a wall surface (not shown) and the ducting 3 has been engaged with the wall plate 1. In a subsequent step, the cable 4 will be inserted into the ducting 3 and the box 2 is engaged with the wall plate 1. In another step a plug connection is formed between the connector 5 and the connector of another length of cable (not shown).

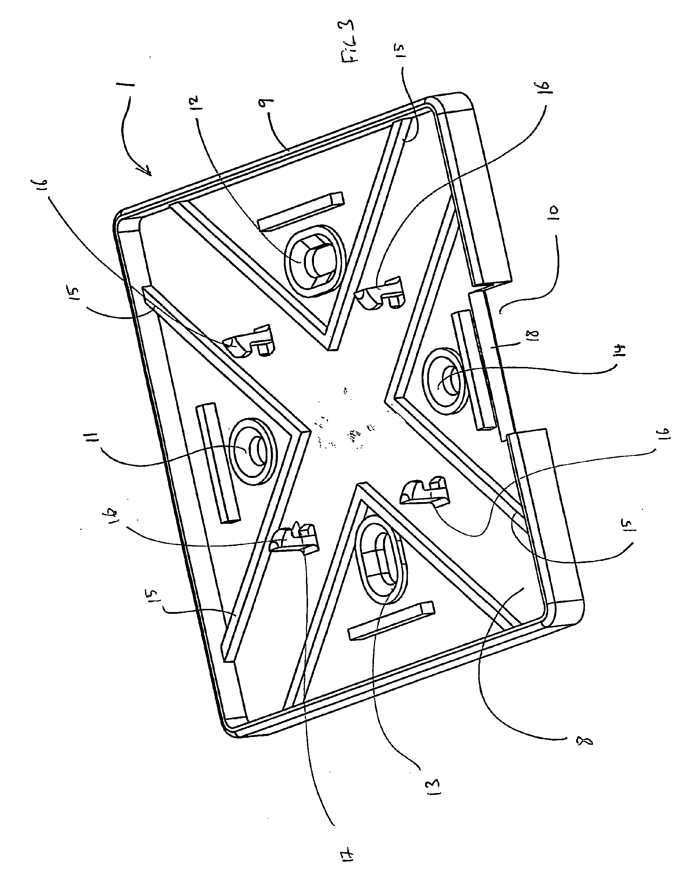

Figure 3 shows an isometric view of the wall plate 1 at enlarged scale. It comprises a flat, generally square plate 8 which is moulded in thermoplastic material, for example uPVC. It is formed with an upstanding rim 9 which extends almost completely around the perimeter of the plate. It can be seen that, in the assembled configuration, this snugly holds the edge of the box 2 (see Figure 1) to prevent dirt entering the space between the plate and the box.

There is a notch 10 in one side of the plate, for receiving the end of the ducting 3. It comprises a surface 18 which acts as a stop, up to which the ducting 3 can be inserted.

There are four screw holes 11, 12, 13, 14 which are suitably reinforced. Two of the holes 11, 14 are round for holding a screw. The other holes 12 and 13 are in the form of elongate slots. This allows a first screw to be engaged in one of the elongate holes 12, 13, after which the plate is levelled using a levelling device so that it is exactly level, whereupon the remaining screws are fixed.

Upstanding ribs 15 are provided to strengthen the plate. There are four upstanding detents 16. They are integrally formed with the plate 1 and, being formed of a thermoplastic material, they have a certain amount of resilience. Each has an undercut formation 17 which, as will be explained further below, is for engaging a corresponding formation formed in the rear face of the box.

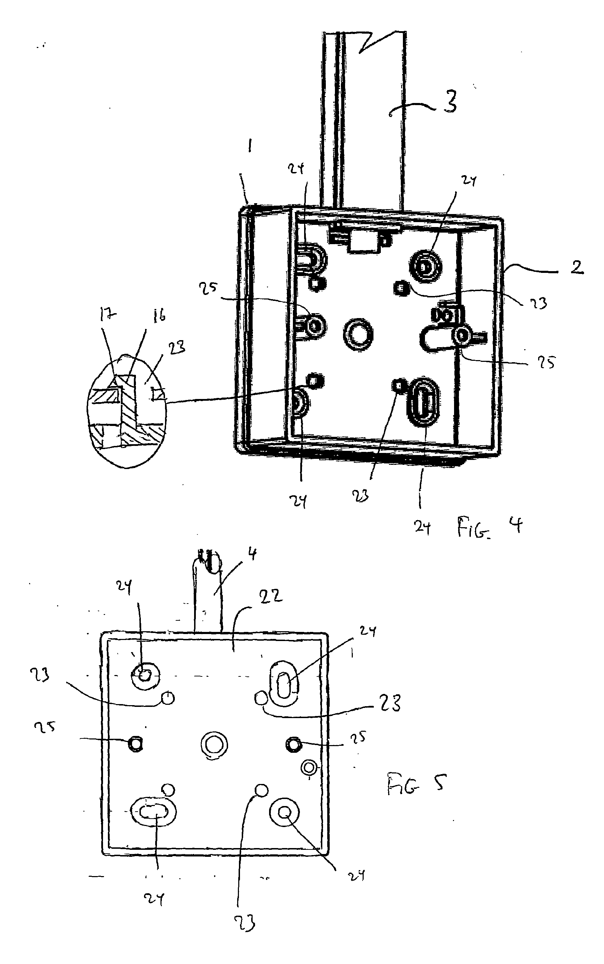

Figure 5 shows a view of the underneath of the box, showing the rear face 22.

The box 2 is a closed structure in the sense that it comprises a front face 19, side walls 20, 21 and two other side walls (not visible) and a rear face 22 (see Figure 5). These are all at least partially complete. Some of these faces comprise holes (particularly preferably the rear face 22), but are not such as to compromise the electrical integrity of the box, particularly during use.

In a manufacturing step, suitably carried out separately from the assembly step, for example in a factory, the box 20 is assembled by making a face plate 19 incorporating a service distribution device (in this case a three-pin socket), attaching wires of the cable 4 to contacts of the device and then fixing the face plate 19 to the rest of the box 2, for example by screwing in position.

Figure 4 is a sketch isometric view showing the lower part of the box engaged with the wall plate 1 and the ducting 3, without a face pate 19. Figure 4 does not represent the appearance of the system during assembly. It is provided for explanation only. In practice, the box 2 would be closed by the face plate 19, incorporating the service distribution device. Further, cabling would be present but is not shown, for clarity.

It can be seen that the lower face 22 of the box comprises four holes 23 which are dimensioned so that the heads of the detents 16 pass through the holes. It can be seen from the inset shown in Figure 4 that when a detent 16 is passed through a respective hole, it is flexed to one side and, once the undercut 17 has passed through the hole, the undercut clicks into position so that it fits into the base of the box, whereby the box is held against the wall plate. It should be noted that the undercuts 17 of the detents, as shown in Figure 3, face one another. If they all faced in the same direction, there would be a danger that a blow in a particular direction would loosen the box to unintentionally. The rim 9 also helps to resist an unintended dislocation of the box 2 from the wall plate 1. However, if it is desired to restructure the system, the box can be removed from the wall plate 1 by applying a sufficiently large force away from the wall.

The lower face 22 of the box further comprises a set of screw holes 24 through which conventional screws can be passed to directly fix the box to a wall, in a conventional manner. This allows the box of the present invention to be used in systems assembled according to a conventional technique (not according to the invention), where appropriate. Two screw posts 25 having screw holes are also provided, to allow a face plate or service distribution device, (not shown) to be fitted to the front of the box, to close it.

The present invention has been described above by way of example and modifications can be made within the invention, which extends to equivalents of the features described. The invention also consists in any individual features described or implicit herein or shown or implicit in the drawings or any combination of any such features or any generalisation of any such features or combination.

## Claims

1. A service distribution system, comprising a wall element, having a first side for mounting adjacent to wall and a second side opposite the first side, an electrical or service distribution box engageable with the wall element, respective fixing means being provided on the second side of the wall element and in the box for releasably fixing the box to the wall element, wherein the box comprises a service distribution device connected to wires or cables, the wires or cables terminating in a plug connector, the face of the box for contacting the wall element being substantially closed.

2. A service distribution system according to claim 1, wherein the wall element comprises a wall plate.

3. The service distribution system according to claim 1, wherein the shape and size of the wall element correspond to the shape and size, in the plane of the wall, of the service distribution box.

4. A service distribution system according to any preceding claim, wherein the fixing means is configured so that it is substantially covered by the service distribution box when the service distribution box is in place in the wall element.

5. A service distribution system according to any preceding claim, wherein the fixing means comprises detent means having a first position allowing the wall element and service distribution box to be separated and a second position resisting separation of the wall plate and service distribution box.

6. A service distribution system according to claim 5, wherein the detent means is biased into the second position.

7. A service distribution system according to claim 4 or 5, wherein there is plurality of detent means.

8. A service distribution system according to any preceding claim, wherein at least one of the wall element and service distribution box comprises a projecting rim for extending around the perimeter of the other of the wall element and service distribution box.

9. A service distribution system according to any preceding claim, comprising at least one length of ducting for containing cables such as electrical cables or optical signal cables.

10. A method of installing a service distribution system, comprising fixing to a wall a wall element having a first side for mounting adjacent the wall and a second side opposite the first side, connecting an electrical or service distribution box to the wall element, using respective fixing means provided on the second side of the wall element and the box, wherein the box comprises a service distribution device connected to wires or cables, the wires or cables terminating in a plug connector, the face of the box for contacting the wall element being substantially closed, the plug connector of the box being connected to a corresponding plug connector of wires or cables of the service distribution system.
